# FASCICULE DE BREVET EUROPEEN

(11) **EP 3 281 399 B1**
(45) Date de publication et mention de la délivrance du brevet: **23.10.2019**
(21) Numéro de dépôt: 16714430.2
(22) Date de dépôt: 05.04.2016
(51) Int. Cl.: B64C 39/02, B64D 45/00, H04N 5/232, H04N 5/225

(54) **SYSTEME DE DECLENCHEMENT DU DECOLLAGE D'UN DRONE A LA SUITE DE LA DETECTION D'UN EVENEMENT SURVENU A UN ENDROIT DETERMINE**
SYSTEM ZUR AUSLÖSUNG DES STARTS EINER DROHNE NACH FESTSTELLUNG EINES EREIGNISSES AN EINEM BESTIMMTEN ORT
SYSTEM FOR TRIGGERING THE TAKE-OFF OF A DRONE FOLLOWING THE DETECTION OF AN EVENT THAT OCCURRED AT A PREDETERMINED LOCATION

(30) Priorité: 07.04.2015 FR 1552971; 14.12.2015 FR 1562286
(43) Date de publication de la demande: 14.02.2018
(73) Titulaire: Pixiel, 44400 Reze (FR)
(72) Inventeur: BARANGER, Philippe, 44690 La Haie Fouassiere (FR); ROGEZ, Moïse, 44400 Reze (FR)
(74) Mandataire: Vidon Brevets & Stratégie
(86) Numéro de dépôt international: PCT/EP2016/057455
(87) Numéro de publication internationale: WO 2016/162342

(56) Documents cités:
- WO-A1-2015/021159
- WO-A1-2015/029007

## Description

### 1. Domaine de l'invention

L'invention concerne un système de prise de vues comprenant un drone embarquant un dispositif de prise de vues, et des boitiers de télécommande pour contrôler le déplacement du drone et les prises de vues. L'invention concerne plus particulièrement le fait que le drone est doté d'équipements évolués permettant de garantir son bon fonctionnement et une grande qualité dans le contenu visuel enregistré et/ou retransmis.

### 2. Art antérieur

De nos jours, de nombreux engins volants sans pilote et télécommandés sont disponibles. Ces appareils, appelés plus communément des drones, disposent d'une nacelle accueillant la charge utile adaptée à différents domaines d'applications, par exemple, la défense, la sécurité, la recherche et le sauvetage, l'exploration, la navigation, le transport, la surveillance de scènes, et les constellations de satellites ou autres réseaux de télécommunications par radio fréquences ou liaison optroniques laser point-à-multipoints pouvant être déployés en espace libre. Ces appareils comportent généralement une pluralité de moteurs animant en rotation des hélices ayant un axe vertical. Les hélices et les moteurs associés permettent une bonne stabilité du drone. Cet avantage est important lorsque la charge utile est un appareil photographique destiné à prendre des photographies, des vidéos des lieux survolés par le drone ou des vidéos ou photos prises en infrarouge, thermique, proche des fréquences visibles, ou en ultraviolet (de telles fréquences sont utiles pour évaluer le stress hydrique en eau des plantes dans les champs).

La photographie aérienne utilise de plus en plus les drones. Ces appareils peuvent évolués dans des endroits à l'air libre ou à l'intérieur de bâtiments. Les moteurs étant électriques, l'appareil n'est pas bruyant ni polluant, permettant ainsi son utilisation à l'intérieur de bâtiments. Une centrale inertielle est embarquée pour stabiliser horizontalement le drone et ainsi maintenir l'angle de prise de vue par rapport à la verticale. Lors d'un vol stationnaire, le drone fait appel à un module GPS (de l'anglo-saxon « Global Positioning System ») pour vérifier qu'il ne dévie pas de sa position programmée et si c'est le cas, d'effectuer des actions correctives pour revenir vers cette position. De même, le module est utilisé pour réaliser un vol rectiligne afin de produire une vue en travelling d'un site. Le drone peut effectuer des vols plus complexes en programmant en latitude et en longitude une succession de points géographiques à atteindre selon un certain ordre. Le drone comporte une pluralité de moteurs avec des axes verticaux, une partie des moteurs tournant dans le sens horaire et l'autre dans le sens anti-horaire. En variant la vitesse de certains moteurs, le drone se penche dans la direction où il se déplace. Lors d'un tel déplacement, la nacelle de l'appareil photographique qui doit rester sensiblement horizontale, est accrochée au bâti du drone par des arbres montés en rotation selon trois directions orthogonales entre elles. De cette manière, la direction de prises de vues est parfaitement indépendante de l'orientation du drone. Mais cet équipement nécessite trois moteurs indépendants pour gérer autant de rotules, ce qui rend plus fragile la mécanique du drone et augmentent le coût global du drone. Le pilotage avec trois moteurs pour orienter la nacelle dans la même direction facilite la commande du cadreur qui n'a pas à prendre en compte la direction vers lequel le drone est orienté.

Les drones sont utilisés de plusieurs manières. Ils peuvent par exemple se déplacer au dessus d'un objectif à photographier, ou sur un lieu inaccessible à des personnes (par exemple une centrale nucléaire, au dessus d'un incendie, un lieu non sécurisé, ...). De façon très générale, ils sont commandés au sol par un opérateur et disposent de capteurs (une caméra par exemple) pour examiner l'endroit en lieu et place de l'opérateur. Ainsi, lorsqu'un événement intervient, un incendie par exemple, l'équipe de pompiers utilise un drone pour améliorer sa connaissance du sinistre sans avoir à s'exposer. Ces appareils ne sont donc pas conçus pour être intégrés dans un système de gestion automatique d'événements, qui peut survenir à tout moment et qui ne dispose pas toujours d'un opérateur pour prendre des décisions.

De plus, les problèmes majeurs liés à l'utilisation des drones actuels sont les capacités et performances limités en terme de stabilisation au décollage et en vol, et la sensibilité aux vibrations. Il y a donc lieu de minimiser le nombre de moteurs pour assurer une plus grande autonomie et de prévoir des mécanismes de sécurité qui détecte un trop grand niveau de vibration dommageable à la qualité des images.

WO 2015/029007 A1 divulgue un système de décollage d'un drone à partir d'un abri.

### 3. Objectifs de l'invention

L'invention apporte une solution qui ne présente pas les inconvénients décrits plus haut, en proposant un système de décollage d'au moins un drone à la suite de la détection d'un événement survenant à un endroit particulier.

### 4. Exposé de l'invention

En vue de résoudre au moins les problèmes mentionnés précédemment, la présente invention propose un système de décollage d'au moins un drone comportant une centrale de contrôle au sol et au moins un détecteur associé à un emplacement particulier du sol. La centrale comporte au moins un moyen de communication avec l'au moins un drone pour transmettre un signal de déclenchement du décollage, l'au moins un détecteur transmet vers la centrale de contrôle un signal de détection d'un événement associé à un événement imprévu de déroulant sur l'emplacement particulier. La réception par la centrale de contrôle du signal de détection d'un événement déclenche le signal de déclenchement du décollage pour effectuer une trajectoire passant au moins par l'emplacement particulier du sol où l'événement s'est produit. Le système de décollage comporte une pluralité de drones dont les déplacements sont contrôlés par la centrale, ces drones émettant des signaux représentatifs de leurs fonctionnements actuels, tels que la charge de la batterie et leurs positions, la centrale calculant le temps de retour nécessaire pour revenir à l'endroit du décollage et le temps d'aller pour un nouveau drone vers le lieu de l'événement, la centrale émettant un signal de décollage vers un second drone se trouvant dans l'abri lorsque l'autonomie du drone volant sur l'emplacement particulier lui permet de ne rester en vol au cours d'une durée au moins égale au cumul du temps d'aller et de retour, la centrale émettant un signal de retour vers l'abri au drone volant sur l'emplacement particulier lorsque le second drone arrive sur l'emplacement particulier.

De cette manière, un drone reste toujours à l'endroit de l'événement, même si celui-ci se prolonge dans le temps et de cette manière, le drone est intégré dans un système de surveillance d'au moins un lieu particulier et son vol permet d'améliorer la connaissance de l'événement déclencheur en se rendant sur le lieu particulier où cet événement se produit.

Selon un premier mode de réalisation, le drone est doté d'une caméra et d'un moyen d'émission des images captées par la caméra à la centrale de contrôle. De cette manière, la centrale de contrôle peut analyser les images et mieux déterminer la nature de l'événement.

Selon un autre mode de réalisation, la centrale de contrôle compare les images reçues du drone avec des images préenregistrées en mémoire et prises lors d'une situation normale, détermine les éléments différenciateurs d'une situation normale et affiche ces éléments différentiateurs sur un écran. De cette manière, la centrale de contrôle analyse les images et peut montrer à un opérateur les éléments spécifiques de l'événement détecté afin de l'aider dans la prise de décision d'une intervention.

Selon un autre mode de réalisation, la centrale de contrôle compare les éléments différenciateurs avec des éléments visuels préenregistrés en mémoire afin de déterminer la nature de l'événement détecté, la centrale émet un signal vers un lieu d'intervention lorsque l'élément différenciateur est reconnu parmi les éléments visuels préenregistrés en mémoire et que le code associé à cet élément différenciateur spécifie l'émission d'un tel signal. De cette manière, la centrale de contrôle peut analyser les images pour en extraire les éléments spécifiques de l'événement détecté et en déduire le type d'intervention.

Selon un autre mode de réalisation, le détecteur détecte la présence de fumée, et en ce que le drone est doté d'un capteur thermique et d'un moyen d'émission des données produites par ce capteur thermique vers la centrale de contrôle, un signal d'alerte indiquant un incendie est émis vers un site d'intervention lorsque la centrale de contrôle détermine que les données reçues indique une élévation de la température à l'endroit de l'événement. De cette manière, la centrale peut émettre rapidement un signal d'alerte lors d'un incendie.

Selon un autre mode de réalisation, le détecteur détecte la radioactivité d'un lieu déterminé, et en ce que le drone est doté d'un compteur Geiger et d'un moyen d'émission des données produites par ce compteur Geiger vers la centrale de contrôle, un signal d'alerte indiquant une fuite de particule radioactive est émis vers un site d'intervention lorsque la centrale de contrôle détermine que les données reçues sont supérieures à un seuil déterminé. De cette manière, la centrale peut émettre rapidement un signal d'alerte lors d'une fuite radioactive.

Selon un autre mode de réalisation, le système de décollage comporte une pluralité de drones dont les déplacements sont contrôlés par la centrale, ces drones émettant des signaux représentatifs de leurs fonctionnements actuels, tels que la charge de la batterie et leurs positions, la centrale calculant le temps de retour nécessaire pour revenir à l'endroit du décollage et le temps d'aller pour un nouveau drone vers le lieu de l'événement, la centrale émettant un signal de décollage vers un second drone se trouvant dans l'abri lorsque l'autonomie du drone volant sur l'emplacement particulier lui permet de ne rester en vol au cours d'une durée au moins égale au cumul du temps d'aller et de retour, la centrale émettant un signal de retour vers l'abri au drone volant sur l'emplacement particulier lorsque le second drone arrive sur l'emplacement particulier. De cette manière, un drone reste toujours à l'endroit de l'événement, même si celui-ci se prolonge dans le temps.

Selon un autre mode de réalisation, la centrale de contrôle détermine un parcours aller vers l'emplacement particulier qui s'écarte en chaque point du parcours de retour vers l'abri d'au moins une distance déterminée. De cette manière, un drone allant vers l'endroit où se produit l'événement et un drone en revenant, ne peuvent se télescoper.

Selon un autre mode de réalisation, la centrale de contrôle modifie le parcours du drone en vol lorsque le détecteur ne détecte plus l'événement, le parcours modifié permettant de capter des images à l'aide de la caméra d'endroits se trouvant à la périphérie de l'emplacement particulier. De cette manière, même si l'événement n'est plus détecté, le drone peut explorer la zone autour de l'endroit et détecter un autre événement.

Le présent document décrit également un autre mode de réalisation consistant en un système de prise de vues comprenant un drone et au moins un boitier de télécommande dialoguant avec le drone, ce boitier transmet au drone des signaux radio de déplacement, et des signaux destinés au dispositif de prise de vues pour l'orientation d'une nacelle sur laquelle ledit dispositif de prise de vues est fixé. Le drone comporte en outre une carte électronique pour contrôler une pluralité de moteurs disposés aux extrémités de bras reliés à un bâti. Chaque bras dispose d'au moins un capteur de vibrations transmettant des signaux à la carte électronique, la dite carte compare les signaux à un seuil déterminé et transmet au premier boitier un message signalant que le niveau de vibration capté sur un bras déterminé a dépassé le seuil. De cette manière, le pilote du drone est averti qu'un niveau élevé de vibration est détecté et peut faire revenir le drone pour intervention, de façon à assurer un bon niveau de qualité des images captées par le dispositif de prise de vues.

Selon un autre mode de réalisation la carte électronique exécute un programme de test au cours d'une durée déterminée après le décollage, le programme de test consistant à analyser au moins les signaux mesurés par les capteurs à une fréquence rapide et à détecter des valeurs au-delà d'un seuil, les signaux mesurés par les capteurs étant analysés à une fréquence inférieure à l'issue de l'exécution du programme de test. De cette manière, la détection d'un niveau anormal de vibration est facilitée.

Selon un autre mode de réalisation, la carte électronique exécute un programme de test au cours d'une ascension déterminée après le décollage et jusqu'à une altitude donnée, le programme de test consistant à analyser au moins les signaux mesurés par les capteurs à une fréquence rapide et à détecter des valeurs au-delà du seuil déterminé, le contrôle des mouvements du drone étant accessible par le boitier à l'issue de l'exécution du programme de test. De cette manière, l'état du drone est testé et validé dès son départ de vol.

Selon un autre mode de réalisation, la nacelle du drone est mobile selon au moins deux axes animés en rotation chacun par un moteur, le rotor de chaque moteur étant enserré entre deux groupes de roulements à billes de forme tronconique se faisant face à face par leurs petites révolutions. De cette manière, les jeux mécaniques sont minimisés et la nacelle est solidement maintenue.

Selon un autre mode de réalisation, le système comporte un premier boitier dédié à la commande de vol transmettant au drone au moins des signaux radio de déplacement, et un second boitier dédié au contrôle du dispositif de prise de vues transmettant au drone au moins des signaux radio pour l'orientation d'un nacelle sur laquelle ledit dispositif de prise de vues est fixé et à la fonction de pivotement du drone sur lui-même. De cette manière, il suffit de deux moteurs pour orienter la nacelle dans toutes les directions.

Selon un autre aspect, l'invention concerne un système de surveillance d'un bâtiment comportant une centrale de surveillance reliée à des détecteurs tels que des capteurs de présence, des détecteurs d'ouverture de portes, ou des détecteurs de fumées et reliée à un réseau de communication pour transmettre un message d'alerte. Le bâtiment comporte un abri destiné à entreposer un drone utilisé dans le système décrit précédemment selon l'un des modes de réalisation, la détection d'un événement anormal à un endroit déterminé déclenchant le décollage du drone selon un parcours préprogrammé vers un point où l'endroit déterminé est visible du drone et l'émission vers la centrale de surveillance des images captées par le dispositif de prise de vues, la centrale de surveillance émettant vers le réseau de communication un message d'alerte lorsque les images reçues sont représentatives d'une situation anormale.

Selon un autre mode de réalisation, la centrale de surveillance déclenche périodiquement le décollage du drone selon un parcours préprogrammé qui le fait revenir à l'abri, les images captées par le dispositif de prise de vues sont transmises à la centrale de surveillance et comparées à des images de références enregistrées, un écart important de contenu déclenchant l'émission d'un message d'alerte. De cette manière, la détection d'une situation anormale est facilitée.

### 5. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- la figure 1 présente un schéma d'un drone montrant les principaux éléments, selon un exemple de réalisation,
- la figure 2 présente un exemple de réalisation d'un moteur animant un mouvement de la nacelle et doté de roulements à billes de forme conique,
- la figure 3 présente un exemple de menu montrant un menu doté d'icones de contrôle de l'appareil de prise de vues embarqué dans un drone,
- la figure 4 présente un ensemble de bâtiments doté d'un système de déclenchement du décollage d'un drone selon un mode particulier de réalisation,
- la figure 5, présente un tableau en mémoire des paramètres d'un parcours parcouru par au moins un drone,
- la figure 6 présente les différents parcours de drones qui se déroulent à la suite de la détection d'un événement imprévu,
- la figure 7 présente un autre exemple d'un système de décollage appliqué à la surveillance d'un bâtiment en utilisant un drone.

### 6. Description d'un mode de réalisation de l'invention

### 6.1 Principe général

L'invention concerne un système de décollage d'un drone comportant une centrale de contrôle au sol et au moins un détecteur associé à un emplacement particulier du sol. La centrale comporte un moyen de communication avec un drone pour transmettre un signal de déclenchement du décollage, l'au moins un détecteur transmet vers la centrale de contrôle un signal de détection d'un événement associé à un événement imprévu de déroulant sur l'emplacement particulier. La réception par la centrale de contrôle du signal de détection d'un événement déclenche le signal de déclenchement du décollage pour effectuer une trajectoire passant au moins par l'emplacement particulier du sol où l'événement s'est produit. De cette manière, le drone peut améliorer la connaissance de l'événement déclencheur en se rendant sur l'emplacement où il a été détecté.

### 6.2 Description d'un drone utilisable pour le système de décollage

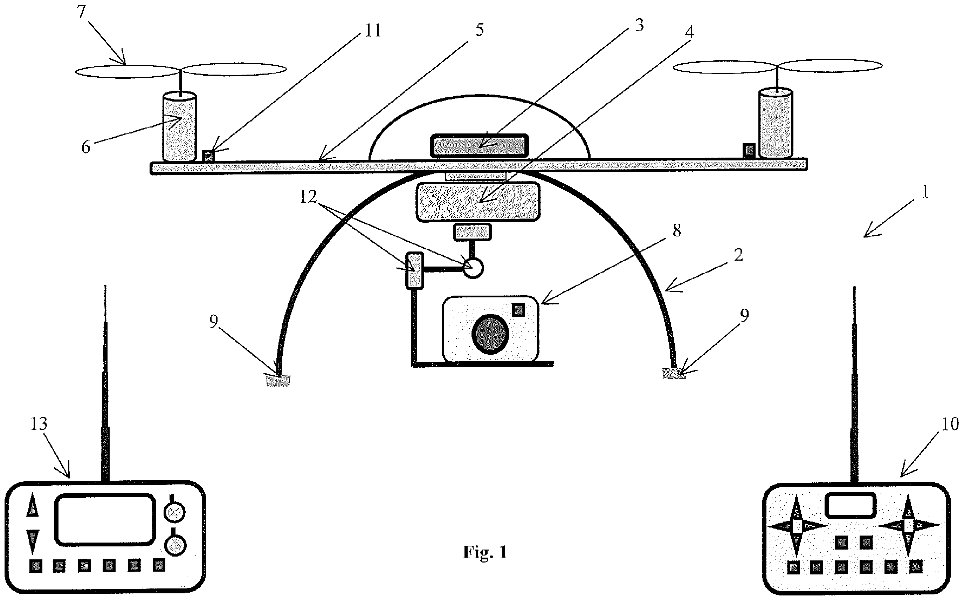

La **FIG.1** présente une vue de profil du système de prise de vues comprenant un drone et au moins deux boitiers de télécommande. Selon une variante de réalisation, les commandes pour gérer la photo et/ou la vidéo et les commandes de vol du drone sont intégrées sur la même télécommande. Selon un exemple préféré de réalisation, le drone 1 comporte un bâti 2, sur lequel s'accroche la carte de contrôle 3, la batterie 4 et une pluralité de bras 5 terminés par des moteurs 6 animant en rotation des hélices 7. La carte de contrôle 3 comporte une unité centrale associée à un programme, un module GPS permettant de connaître la position précise du drone, une centrale inertielle, un module de communication radio. La carte de contrôle 3 intègre un module Selon les modèles, le drone est équipé de quatre bras à symétrie radiale et autant de moteurs, ou six ou huit bras. Selon une variante, les bras de suspension des moteurs forme un « H », quatre moteurs étant disposés aux extrémités des branches et deux aux intersections. Le drone embarque une charge utile 8 fixée à une nacelle, cette charge est par exemple un appareil de prise de vues. Le drone dispose de pieds 9 dotés d'amortisseurs à leurs extrémités pour se poser au sol. Un boitier de télécommande 10 contrôle à distance les mouvements du drone en communiquant avec lui par une liaison radio bidirectionnelle. Le drone émet en permanence des informations telles que :
- Position obtenue par GPS, ou tout autre système d'émission de signaux de positionnement émis par un point fixe,
- Vitesse obtenue en analysant l'évolution de la position,
- altitude obtenue par GPS ou par une sonde barométrique et des signaux venant de l'accéléromètre,
- qualité du signal radio reçu et de la liaison radio en général,
- nombre de satellite GPS accessibles ou d'émetteurs pour calculer le positionnement et niveau de réception, etc.

La carte de contrôle 3 génère, en fonction des commandes émises par le boitier 10 et les indications fournies par la centrale inertielle, des signaux de contrôle vers les différents moteurs 6. Le boitier de télécommande 10 dispose de commandes pour diriger le drone, et de moyens d'affichage pour connaître son état, par exemple la capacité de ses batteries ou la qualité de la liaison radio.

La carte de contrôle 3 reçoit les commandes émises par le boitier 10, et calcule les signaux de contrôle à transmettre aux moteurs pour réaliser les mouvements demandés. Le programme exécute aussi des taches de fond comme la stabilisation du drone à l'aide d'une centrale inertielle, et des taches de test.

Selon un premier perfectionnement, des capteurs de vibrations 11 sont positionnés sur chaque bras 5 se terminant par des moteurs 6 et au plus près de ceux-ci, et sont reliés à une interface d'entrée du bloc de contrôle 3. Chaque capteur comporte au moins deux gyroscopes dont les axes appartiennent à des plans se soupant à angle droit. Eventuellement, le capteur comporte trois gyroscopes et trois accéléromètres. La carte de contrôle calcule à partir de ces 6 valeurs une valeur de l'amplitude des vibrations associée à chaque bras. Le programme exécuté par la carte de contrôle 3 compare en permanence les valeurs de vibrations avec un seuil déterminé. Si l'amplitude des vibrations d'un capteur fixé sur un bras augmente, alors le programme émet un message d'alarme vers le boitier de commande 10 qui l'affiche pour le pilote. Ce disfonctionnement peut être dû au moteur, au jeu dans sa fixation, à cause d'une pale voilée de l'hélice, ou une hélice mal équilibrée, etc. En appuyant sur une commande, le pilote peut demander au boitier 10 d'afficher en temps réel le niveau de vibrations calculé, ce niveau s'affichant par exemple sous la forme d'une barre graphique graduée selon différentes couleurs, par exemple : vert, orange rouge, ou par une indication numérique. A la réception d'une alarme, le pilote prend connaissance de l'état de vibration du ou des bras 5 concerné. Lorsque ce niveau de vibration atteint une valeur critique, le pilote peut décider de faire revenir le drone. Une fois sur le sol, en utilisant les informations affichées sur le boitier et notamment l'identification du bras concerné, le pilote peut rapidement analyser la situation et le cas échéant, changer une pièce défectueuse sur ce bras. Lorsque le drone embarque un appareil photo, le niveau de vibration diminue la qualité de prise de vues.

Selon un perfectionnement, le programme effectue un autotest dans les premières secondes de vol. Cet autotest consiste à augmenter la fréquence de scan des capteurs et ainsi connaître les niveaux de vibrations au départ du drone. Si ce niveau évolue au cours du vol et dépasse une valeur moyenne calculée à partir des premières secondes de vol, alors un message d'alarme est émis. Selon une variante, l'autotest comporte une montée préprogrammée du drone, sans intervention du pilote, d'une dizaine de mètres par exemple, l'altitude étant déterminée par la sonde barométrique et la position indiquée par le module GPS. Au cours de cette première phase de vol, la carte de contrôle 3 compare les valeurs des capteurs (altitude, vibration, voltage et intensité de la batterie, température, ...) avec une valeur préprogrammée et informe le pilote du comportement du drone au décollage. A la fin de cette phase, le pilote reprend la main et contrôle totalement les mouvements du drone. La fréquence de scan des capteurs diminue afin d'économiser la batterie.

Le drone comporte une mémoire qui enregistre constamment les paramètres de vol (position, altitude, commandes reçues, température des batteries, courant de la batterie, niveau de vibration, ...), le contenu de cette «boite noire » peut être analysé en cas de crash, comme pour un avion civil.

Selon un mode particulier de réalisation, la charge utile du drone est une caméra ou un appareil photo accrochée à une nacelle 11. Selon l'art antérieur, de telle nacelles sont manoeuvrables selon trois axes orthogonaux entre eux : pivotement autour d'un premier axe horizontal, pivotement autour d'un second axe horizontal perpendiculaire au premier, rotation autour d'un axe vertical. Les mouvements de la nacelle selon ces trois axes sont réalisés par trois moteurs 12 électriques, par exemple du type sans balai (ou « brushless » en langue anglo-saxonne). Les commandes pour les moteurs de la nacelle et pour l'appareil de prise de vues sont introduites par le pilote au niveau de la partie vidéo/photo du boitier de télécommande 10. Selon une variante, le maniement des drones utilisés de nos jours pour la photographie aérienne nécessite deux personnes : un pilote qui dispose du boitier de télécommande 10 pour piloter les mouvements du drone, et un cadreur qui introduit ses commandes sur un second boitier de télécommande 13, dit boitier de télécommande vidéo pour contrôler la caméra et les mouvements de la nacelle. Le cadreur voit en temps réel sur un écran les vues prises par l'appareil 8.

De tels drones peuvent prendre des vues artistiques de monuments tels que des églises, des ponts, des tours, etc. Si la caméra est thermique, le drone peut effectuer des mesures de la température des façades pour détecter des défauts d'isolation. Le drone peut aussi survoler des champs cultivés pour filmer l'état des cultures, les images pourront aider le cultivateur à doser son engrais et la quantité d'eau pour l'arrosage. L'utilisation d'un drone est particulièrement utile lorsque l'on a un doute qu'une situation se produise à un certain endroit, au lieu d'un aller soi-même on envoie un drone. Ces applications nécessitent souvent un drone au vol très stable et doté d'une nacelle peu sensible au vibrations.

Dans le cas où un cadreur et un pilote dispose chacun de son boitier de commande, le boitier 13 du cadreur dispose selon un perfectionnement, de la commande de rotation sur lui même du drone. Ainsi, le cadreur commande le pivotement du drone en vol pour orienter la caméra et n'a donc plus besoin d'agir sur le pivotement de la nacelle. Les avantages de ce perfectionnement sont l'économie d'un moteur sur les trois animant la nacelle, une simplification de la mécanique et un allégement de l'appareil. Le pilote abandonne la commande de panoramique au cadreur et continue à commander son drone quelque doit la direction vers lequel il est orienté. Le cadreur n'a aucune connaissance de ce transfert de commande puisque la vidéo qui apparaît sur son écran ne permet pas de distinguer si c'est uniquement la nacelle qui tourne, ou si c'est le drone dans son ensemble.

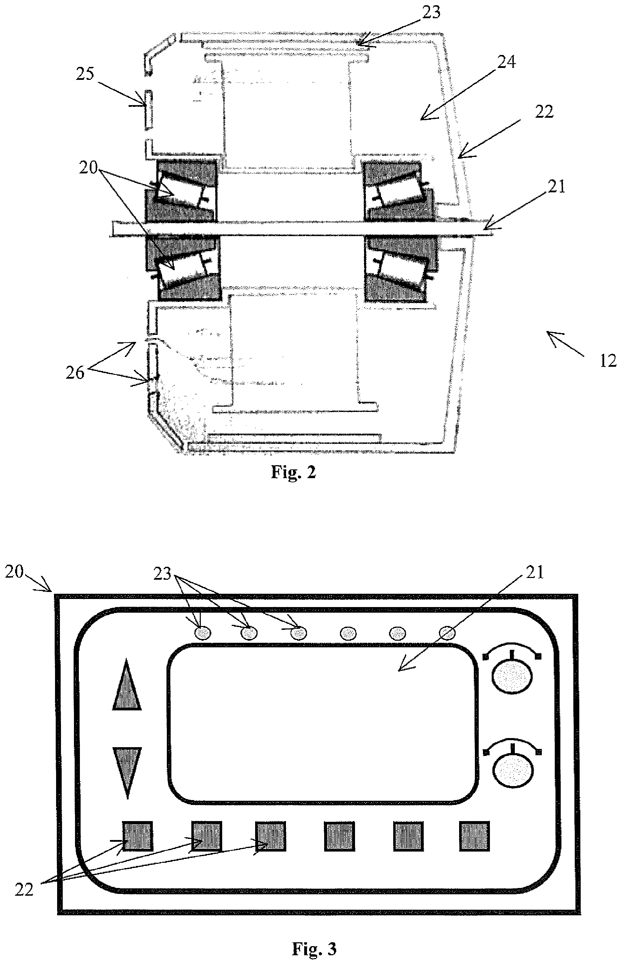

Selon un perfectionnement, les moteurs 12 de la nacelle sont montés sur des roulements coniques placés à l'avant et à l'arrière du moteur. La **Fig. 2** présente les détails d'un moteur 12 avec deux groupes de roulements à billes 20 de forme tronconique enserrant les pièces mobiles du rotor. L'axe central 21 du rotor est solidarisé à une cloche 22 qui recouvre les aimants 23 et les bobines 24. La cloche 22 est ouverte en partie arrière pour laisser visible la base du moteur 25, cette base est fixée sur le bâti du drone par des vis se vissant dans un filetage 26. La présence de deux groupes de roulements coniques se faisant face à face par leurs petites révolutions limite les jeux. L'axe de rotation passe au centre du moteur et l'arbre 21 est directement en prise avec le rotor du moteur 12, de cette façon la mécanique est simplifiée au maximum et le mouvement appliqué à la nacelle est d'une grande précision.

Selon une variante de réalisation, le cadreur dispose d'un boitier de commande 13 pour commander l'appareil de prise de vues. Le cadreur lance son application de commande de l'appareil qui utilise sa liaison Wifi ou tout autre réseau de communication locale pour connaître les appareils accessibles autour de lui et détecte le boitier de commande de vol 10. Le boitier de commande 13 établit une liaison avec le boitier 10 et lui indique qu'il lui transmettra les commandes destinées à contrôler l'appareil de prise de vues 8 et la nacelle 11.

Selon une variante de réalisation, le boitier de commande 13 est tactile et affiche un menu, par exemple celui de la **Fig. 3****.** Le menu affiché par le boitier 20 comporte une zone d'affichage 21, des icones d'introduction de commandes 22 et d'indication de fonctionnement 23. La zone d'affichage reproduit en temps réel le contenu visuel filmé par l'appareil de prise de vues 8 et reçu par le boitier 20 via le boitier 10. Des commandes représentées sur l'écran 21 par des icones permettent au cadreur de lancer l'enregistrement du contenu audiovisuel transmis et reçu et de l'arrêter, d'autres icones contrôlent le pivotement de la nacelle, le travelling, etc. Des voyants lumineux informent de l'état de l'appareil de prise de vues, typiquement le niveau de la batterie, l'état des réglages (autofocus), la luminosité, etc...

Selon une variante de réalisation, d'autres boitier 13 peuvent se connecter avec le boitier par Wifi ou tout autre moyen de communication radio. Ces appareils ne disposent pas des icones de commandes mais uniquement de la fenêtre d'affichage 21. De cette manière, d'autres personnes peuvent voir le contenu visuel filmé par l'appareil de prise de vues 8.

### 6.3 Description d'un système de déclenchement de décollage d'un drone

Selon un mode particulier de réalisation, le drone 1 décrit précédemment n'est pas utilisé avec les boitiers 10 et 13, mais par un système déclenchant son décollage et contrôlant son parcours, ce système comporte notamment une centrale de contrôle à distance du drone communiquant avec le drone en vol à l'aide d'une liaison radio bidirectionnelle.

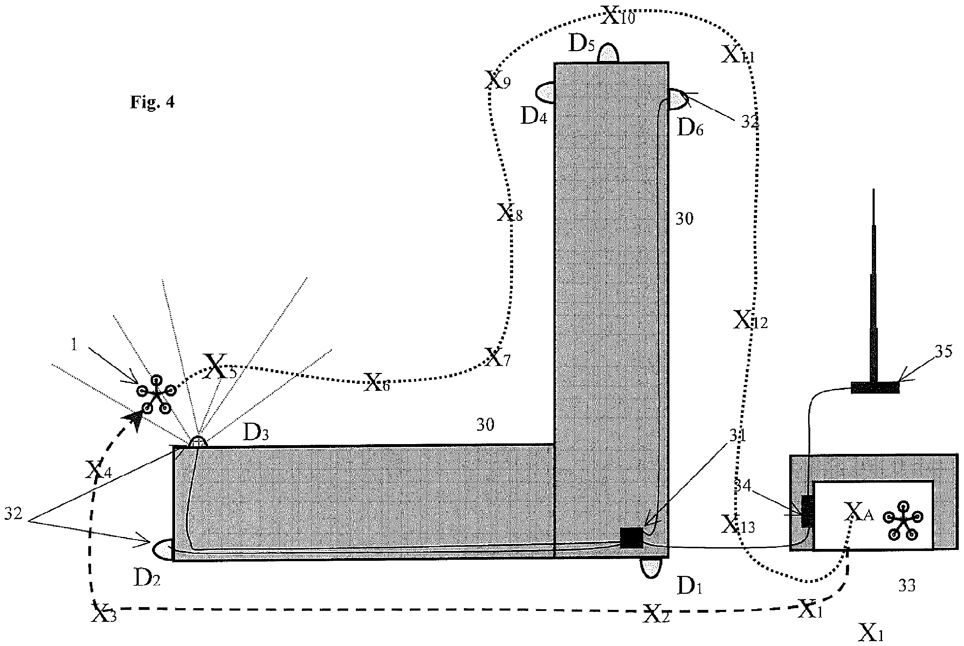

La **Fig.4** présente un ensemble de bâtiments 30 doté d'un système de déclenchement du décollage d'un drone. L'ensemble de bâtiments 30 comporte dans un endroit protégé une centrale de surveillance 31 qui est reliée par fil ou par liaison radio à des capteurs 32 tels que des capteurs de présence, des détecteurs d'ouverture de portes, des détecteurs de fumées, etc...

L'ensemble de bâtiment dispose d'un abri 33 pour entreposer au moins un drone 1. L'abri est doté de moyens autonomes 34 pour recharger les batteries des drones qui y sont stationnés, par exemple par liaison inductive. La centrale de surveillance 31 dispose d'un module radio 35 pour transmettre les commandes de vol au drone et pour éventuellement recevoir le flux visuel capté par un appareil de prise de vues du type de l'appareil 8 décrit par la **Fig. 1****.** L'abri 33 est éventuellement doté d'un transpondeur pour émettre un signal de guidage du drone lors de son retour.

La centrale de surveillance 31 analyse en permanence les signaux transmis par les détecteurs 32. Lorsqu'un détecteur transmet un signal indiquant une situation anormale et donc un événement imprévu : présence d'un individu non autorisé, détection de chaleur ou de fumée, détection d'un son non commun, etc, alors la centrale de surveillance 31 émet le signal de déclenchement du décollage pour effectuer une trajectoire passant au moins par l'emplacement particulier du sol où l'événement s'est produit. Selon un mode préféré de réalisation, la trajectoire du drone est contrôlée en permanence par la centrale de surveillance, le parcours est enregistré au niveau de la centrale qui émet successivement les points de ce parcours en commandant au drone de s'y rendre. De cette manière, si l'événement à l'origine du décollage du drone évolue dans l'espace, la centrale peut modifier le parcours prévu pour changer la destination. C'est notamment le cas lorsque l'état des détecteurs évolue pendant le vol du drone.

Sur la Fig. 4, le drone suit le parcours spécifié par la centrale, représenté par une flèche discontinue, vers un point où un événement s'est produit. L'endroit de l'événement peut être une zone étendue, cette zone étant en tout état de cause au moins celle couverte par le détecteur qui a émis le signal de détection d'un événement. Arrivé à destination, le drone utilise ses capteurs pour analyser la zone et enregistrer des données permettant de déterminer l'origine de l'événement. Selon un mode préféré de réalisation, l'appareil de prise de vues prend en visuel l'endroit de l'événement comme les flèches en pointillé le montrent sur la **Fig. 4** et transmet en temps réel les images à la centrale de surveillance 31 qui les analyse.

La centrale de surveillance compare les images captées avec des images préenregistrées en mémoire, afin de déterminer les éléments qui se différencient d'un contenu visuel préenregistré et donc représentatifs d'une situation anormale. Une fois que ces éléments différenciateurs sont déterminés, une évaluation de la situation est effectuée par la centrale. L'évaluation consiste à comparer le ou les éléments différentiateurs présents sur l'image avec des modèles extraits d'un tableau, chaque modèle étant associé à un niveau d'alerte. Un tel système permet notamment de détecter la présence d'un animal, un chat par exemple, et d'éviter de lancer une alerte. Si par contre l'élément différentiateur est une silhouette humaine, un véhicule, de la fumée, ... alors une véritable alerte est déclenchée, par exemple en mettant en route une sirène et en entrant en communication avec un site d'intervention, où de gardiennage des bâtiments ou simplement le propriétaire du bâtiment. La centrale de contrôle 40 possède une mémoire contenant un tableau associant les caractéristiques visuelles d'éléments différenciateurs avec des codes caractérisant le type d'intervention à effectuer lorsque ces éléments différentiateurs sont reconnus par les capteurs du drone. Ainsi, l'analyse des images de la caméra embarquée dans le drone détermine le type d'alerte, par exemple si de la fumée est détectée, une alarme pompier est lancée, alors que si c'est une présence humaine, un appel à la police est lancé. La centrale émet un appel d'alarme à un numéro de téléphone déterminé à l'avance ou vers un site informatique identifié par son adresse IP par exemple. Lors de cette communication, le contenu audiovisuel capté par le drone est transmis et le destinataire peut en prendre connaissance, de cette manière il peut confirmer la situation d'alerte ou l'infirmer.

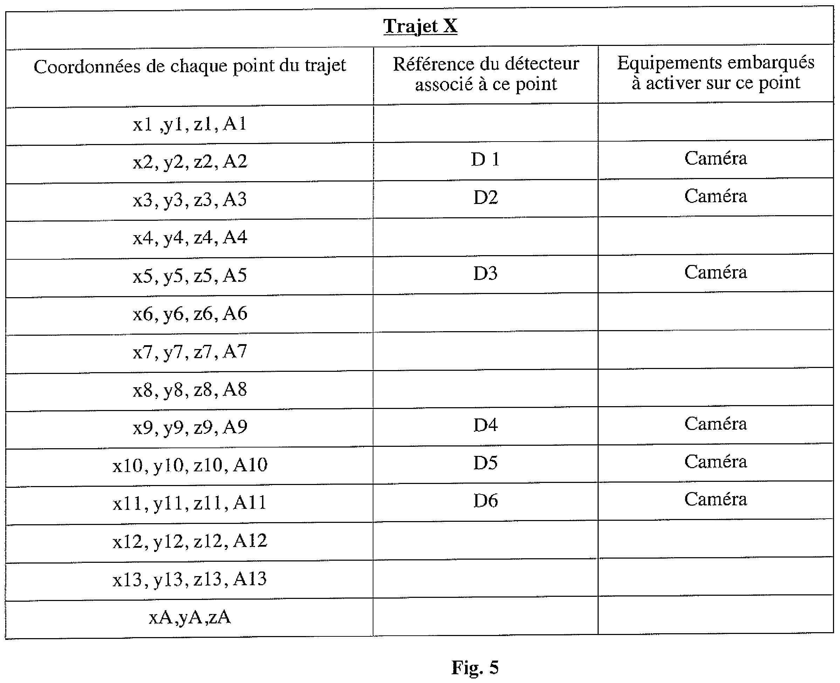

La **Fig. 5****,** présente un tableau en mémoire associé à un parcours d'au moins un drone, ce parcours passant par un lieu où peut se produire un événement. Ce tableau décrit un parcours de drone lors d'une intervention, il est enregistré au niveau de la centrale de surveillance et est utilisé pour commander le décollage du drone et son déplacement sans intervention humaine pour un aller vers le lieu d'un événement et un retour vers l'abri. Un parcours peut être un tracé en ligne droite à une altitude donnée de l'abri 33 vers le lieu de l'événement, ou un trajet plus complexe consistant à passer par différents points intermédiaires, notamment pour éviter des obstacles de grande hauteur. Comme le montre la Fig. 5, un parcours peut passer par plusieurs points où un détecteur est présent et donc où peut se produire un événement anormal. Plusieurs tableaux peuvent être enregistrés dans le cas où les parcours pour aller vers les lieux possibles des évènements sont différents.

Une première colonne définit la succession de points géographiques où le drone doit se trouver au cours de son parcours, chaque point est définit par des coordonnées GPS (latitude, longitude, altitude) et un angle de direction permettant notamment de diriger les capteurs embarqués dans la bonne direction. Une seconde colonne comporte la référence du détecteur associé à un point géographique donné. Cet identifiant du détecteur permet de diriger le drone vers le point géographique associé lorsque ce détecteur détecte un événement imprévu. Une troisième colonne spécifie le type de capteur à activer lorsque le drone se trouve sur le point géographique associé. Ce type de capteur est par exemple : une caméra dans le visible, une caméra thermique, un détecteur infrarouge, un détecteur ultraviolet, un capteur de fumée, un compteur Geiger ....

Selon un perfectionnement, tant que le drone possède une autonomie de vol, il reste sur la zone associée au détecteur 32 qui a émis un signal de détection d'un événement. La détermination de l'autonomie peut être déterminée simplement en considération que le drone peut être en vol une durée maximale, 30 minutes par exemple, et qu'il peut effectuer le parcours complet au cours d'une durée de parcours 5 minutes par exemple, la différence de ces deux durées déterminant l'autonomie du drone sur un point géographique donné. Ce mode de réalisation ne prend pas en compte les événements ambiants tels que le vent, la pluie, la température qui peut faire varier le temps de parcours. Une variante consiste en ce que le drone transmet à la centrale de surveillance une indication sur son autonomie lors d'intervalles de temps réguliers, cette indication dépend notamment de l'état de sa batterie. Selon une variante, la centrale lui transmet un signal qui provoque son retour. Lorsque le drone revient dans l'abri 33, ses batteries sont immédiatement rechargées de façon qu'il reste opérationnel en permanence. Dans tous les cas, le drone revient dans l'abri 33 lorsque la capacité de ses batteries descend en-dessous d'un seuil déterminé.

Selon un perfectionnement, lorsque le drone arrive sur la zone de destination mais que la centrale de surveillance 31 ne reçoit plus de signaux provenant du détecteur 32, la trajectoire du drone est modifiée pour capter des images se trouvant à la périphérie de ladite zone. Par exemple, le détecteur est placé au milieu d'un mur et peut détecter la présence d'un individu à 50 mètres. Si la présence détectée a disparu, la centrale 31 modifie la trajectoire du drone pour patrouiller à 70 mètres du détecteur sur une zone en arc de cercle. Si au cours de ce premier parcours, aucune présence n'est détectée par le drone, alors la centrale modifie la trajectoire du drone pour patrouiller à 90 mètres du détecteur sur une zone également en arc de cercle, et ainsi de suite en s'éloignant du détecteur 32.

Selon un perfectionnement, le drone émet vers la centrale de surveillance des signaux représentatifs de son fonctionnement actuel. Par exemple, le drone émet un signal indiquant sa position, son autonomie, des données fournies pas ses capteurs embarqués notamment la tension de la batterie. Selon un perfectionnement, le drone émet un signal indiquant qu'il lui reste un peu plus de temps d'autonomie que celui qu'il a utilisé pour l'aller. Si le drone est constamment contrôle du sol, il reçoit un signal de déclenchement du décollage et un point géographique à atteindre. Arrivé à ce point, il émet un signal à la centrale qui calcule ainsi le temps nécessaire au retour. Dès que la centrale détermine que cette autonomie est proche du temps de retour, elle envoie un signal de retour au drone.

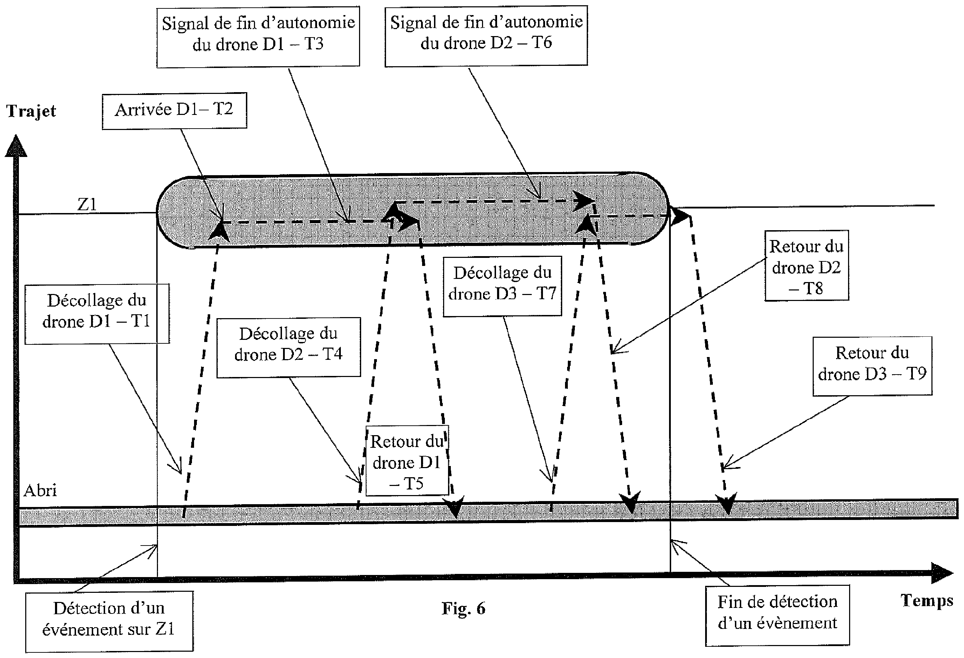

Selon un perfectionnement, le système de décollage contrôle une flotte de plusieurs drones pour assurer une présence ininterrompue sur le point géographique où un événement imprévu intervient. La Fig. 6 présente les différentes étapes chronologiques qui s'écoulent à la suite de la détection d'un événement imprévu et qui permettent à plusieurs drones d'être présents successivement sur un lieu donné.

A l'étape T1, un détecteur 32 émet un signal de détection d'un événement. La centrale reçoit le signal et émet vers un drone D1 déterminé, un signal de décollage. A l'étape T2, le drone D1 effectue le parcours vers le point géographique où un événement imprévu intervient et commence l'examen du lieu.

Au bout d'un certain temps (étape T3), il reste au drone D1 suffisamment d'autonomie pour lui faire effectuer le parcours complet. A l'étape T4, la centrale émet alors un signal de décollage d'un second drone D2 pour qu'il se dirige vers le point géographique où se trouve D1. Lorsqu'il reste suffisamment d'autonomie au drone D1 pour effectuer son retour à l'abri, ce dernier entame son retour. Ce moment intervient à peu de choses près au moment où le drone D2 arrive sur le point géographique et commence lui aussi l'examen de ce lieu. Le drone revient à l'abri et met aussitôt sa batterie à recharger (étape T5). Au bout d'un certain temps (étape T6), il reste au drone D2 suffisamment d'autonomie pour lui faire effectuer le parcours complet. A l'étape T7, la centrale émet un signal de décollage vers un troisième drone D3. Lorsqu'il reste suffisamment d'autonomie au drone D2 pour effectuer son retour à l'abri, à l'étape T8, ce dernier entame son retour. Le drone D3 fait le relais pour l'examen du lieu. Supposons qu'à un certain moment, le détecteur 32 n'émet plus un signal indiquant un événement imprévu, la centrale transmet alors un signal de retour au drone D3 (étape T9).

Selon ce mode de fonctionnement, le lieu géographique où un événement imprévu a été détecté reste toujours sous surveillance, quelque soit la durée de cet événement.

Selon un perfectionnement, la centrale gère à distance les parcours des drones allant sur le lieu de l'événement et en revenant pour éviter les collisions. Selon un mode préféré de réalisation, la centrale définit les points du parcours aller qui s'éloignent des points du parcours retour d'au moins une distance de sécurité, par exemple 5 mètres. Cette distance est la même que celle pour éviter les obstacles éventuels (lignes électriques, végétation, barrière virtuelle de limite de propriété, ...). Selon un mode particulier de réalisation, le parcours du drone tel que défini par la centrale décrit un parcours aller très différent du parcours retour, comme le montre le parcours de la Fig. 4. Par exemple, le drone arrive à l'endroit d'un événement en contournant un bâtiment d'un coté, et revient vers l'abri en le contournant de l'autre coté.

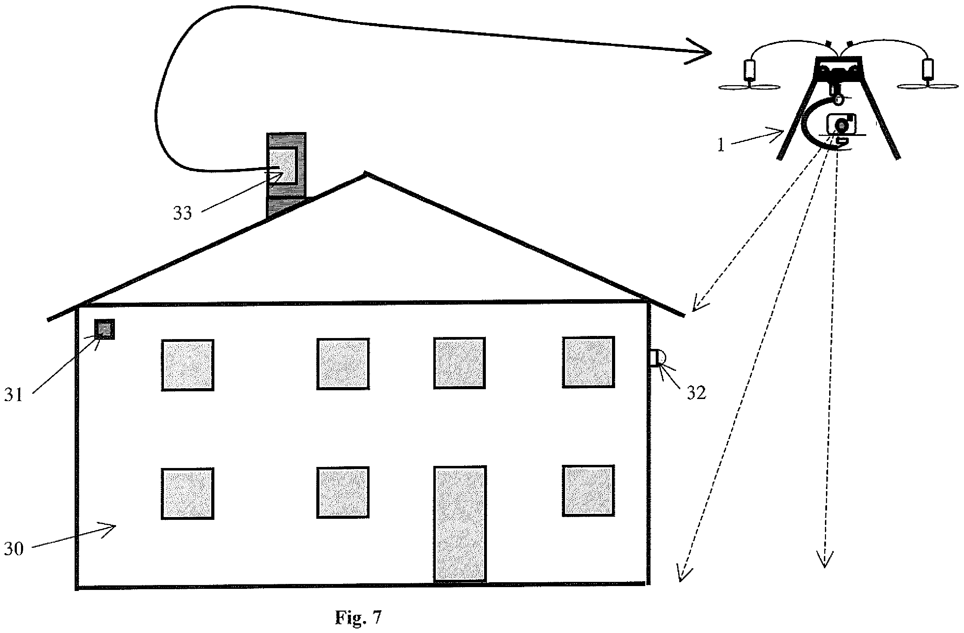

La Fig. 7 présente un autre exemple d'un système de décollage d'un drone dans le cas de la surveillance d'une maison particulière 30. La maison comporte une centrale de surveillance qui reçoit des signaux provenant de détecteurs de présence 32 et qui déclenche le décollage d'un drone lorsque l'un de ces détecteurs sont activés par la présence d'un individus ou l'apparition de fumée. Le drone est normalement garé dans un abri 33 qui possède un moyen pour recharger sa batterie. La recharge de la batterie peut par exemple s'effectuer en posant les pieds du drone sur des plaques métalliques alimentées en électricité. Cet abri est de préférence en hauteur et fermé par une trappe afin de protéger le drone des intempéries, par exemple une cheminée factice. Les dimensions de cet abri dépendent du drone et doivent être suffisantes pour permettre son décollage et son atterrissage

Selon un mode particulier de réalisation, le drone effectue des parcours préprogrammés lors d'une situation normale, c'est à dire sans qu'un capteur ne détecte un mouvement ou de la fumée ou chaleur, et les images acquises sont enregistrées dans la centrale de surveillance. Ensuite, lors d'une détection d'un événement anormal, les images du drones prises au niveau du sol sont comparées en temps réel à celles enregistrées et les différences sont déterminées, l'alerte est lancée selon la nature et l'importance des éléments différents.

Selon un mode particulier de réalisation, le système d'alarme déclenche à intervalle régulier le décollage du drone pour qu'il effectue un parcours préprogrammé couvrant l'ensemble de la zone à protéger. Selon une variante de réalisation, le vol peut aussi être déclenché manuellement par un vigile qui fait sa ronde de surveillance. Les images sont analysées et comparées à une situation normale, si une situation d'alarme est détectée alors un message d'alerte est émis comme précédemment. A noter que le drone peut parfaitement être utilisé à l'intérieur de bâtiments lorsqu'ils sont suffisamment hauts pour permettre son évolution, notamment pour la surveillance d'entrepôts.

Selon un mode particulier de réalisation, le système de décollage est intégré dans un système de surveillance de site présentant des dangers pour des personnes, par exemple une centrale nucléaire, ou des sites de production de produits chimiques. Dans le cas d'une centrale, le drone est équipé d'au moins un compteur Geiger pour mesurer la radioactivité à l'endroit où un événement imprévu est détecté. Arrivé à cet endroit, le capteur est activé et le drone émet les données produites par ce compteur Geiger vers la centrale de contrôle 40. La centrale de contrôle émet un signal d'alerte indiquant une fuite de particule radioactive lorsque les valeurs de radioactivité sont supérieures à un seuil déterminé.

L'invention n'est pas limitée aux modes de réalisation qui viennent d'être décrits. En particulier, le système de décollage peut être intégré à tout système de surveillance et de prise de mesure à un endroit déterminé, cet endroit pouvant notamment présenter des dangers pour l'homme.

## Revendications

1. Système de décollage d'au moins un drone (1) à partir d'un abri destiné à entreposer au moins un drone, le dit système comportant une centrale de contrôle au sol (40), une pluralité de drones dont les déplacements sont contrôlés par ladite centrale et au moins un détecteur (41) associé à un emplacement particulier du sol, la centrale comportant au moins un moyen de communication avec l'au moins un drone pour transmettre un signal de déclenchement du décollage de l'abri, l'au moins un détecteur comportant un moyen de transmission vers la centrale de contrôle d'un signal de détection d'un événement associé à un événement imprévu de déroulant sur l'emplacement particulier, la réception par la centrale de contrôle du signal de détection d'un événement déclenchant le signal de déclenchement du décollage pour effectuer une trajectoire passant au moins par l'emplacement particulier du sol où l'événement s'est produit,
**caractérisé en ce que** les drones émettent des signaux représentatifs de leurs fonctionnements actuels, tels que la charge de la batterie et leurs positions, la centrale calculant le temps de retour nécessaire pour revenir à l'endroit du décollage et le temps d'aller pour un nouveau drone vers le lieu de l'événement, la centrale (40) émettant un signal de décollage vers un second drone se trouvant dans l'abri lorsque l'autonomie du drone volant sur l'emplacement particulier lui permet de ne rester en vol au cours d'une durée au moins égale au cumul du temps d'aller et de retour, la centrale émettant un signal de retour vers l'abri au drone volant sur l'emplacement particulier lorsque le second drone arrive sur l'emplacement particulier.

2. Système de décollage selon la revendication 1, **caractérisé en ce que** l'au moins un drone (1) est doté d'une caméra et d'un moyen d'émission des images captées par la caméra à la centrale de contrôle (40).

3. Système de décollage selon la revendication 2, **caractérisé en ce que** la centrale de contrôle (40) compare les images reçues d'un drone avec des images préenregistrées en mémoire et prise lors d'une situation normale, détermine les éléments différenciateurs d'une situation normale et affiche ces éléments différentiateurs sur un écran.

4. Système de décollage selon la revendication 3, **caractérisé en ce que** la centrale de contrôle (40) compare les éléments différenciateurs avec des éléments visuels préenregistrés en mémoire afin de déterminer la nature de l'événement détecté, la centrale émet un signal vers un lieu d'intervention lorsque l'élément différenciateur est reconnu parmi les éléments visuels préenregistrés en mémoire et que le code associé à cet élément différenciateur spécifie l'émission d'un tel signal.

5. Système de décollage selon la revendication 1, **caractérisé en ce que** l'au moins un détecteur (41) détecte la présence de fumée, et **en ce que** l'au moins un drone (1) est doté d'un capteur thermique et d'un moyen d'émission des données produites par ce capteur thermique vers la centrale de contrôle (40), un signal d'alerte indiquant un incendie est émis vers un site d'intervention lorsque la centrale de contrôle (40) détermine que les données reçues indique une élévation de la température à l'endroit de l'événement.

6. Système de décollage selon la revendication 1, **caractérisé en ce que** l'au moins un détecteur (41) détecte la radioactivité d'un lieu déterminé, et **en ce que** l'au moins un drone est doté d'un compteur Geiger et d'un moyen d'émission des données produites par ce compteur Geiger vers la centrale de contrôle (40), un signal d'alerte indiquant une fuite de particule radioactive est émis vers un site d'intervention lorsque la centrale de contrôle (40) détermine que les données reçues sont supérieures à un seuil déterminé.

7. Système de décollage selon l'une quelconque des revendications précédentes, **caractérisé en ce que** l'au moins un drone dispose d'un moyen d'émission vers la centrale de surveillance de signaux représentatifs de son fonctionnement actuel, tels que la charge de sa batterie et sa position, lors de l'arrivée sur l'emplacement particulier, l'au moins un drone émet vers la centrale de surveillance un signal permettant à ladite centrale de calculer le temps nécessaire au retour, la centrale déterminant à l'aide de ces signaux que l'autonomie du drone est juste suffisante pour un retour vers l'endroit du décollage émet alors un signal de retour du drone.

8. Système de décollage selon l'une quelconque des revendications précédentes, **caractérisé en ce que** la centrale de contrôle (40) détermine un parcours aller vers l'emplacement particulier qui s'écarte en chaque point du parcours de retour vers l'abri d'au moins une distance déterminée.

9. Système de décollage selon l'une quelconque des revendications précédentes sous la dépendance de la revendication 2, **caractérisé en ce que** la centrale de contrôle (40) modifie le parcours de l'au moins un drone en vol lorsque le détecteur ne détecte plus l'événement, le parcours modifié permettant de capter des images à l'aide de la caméra (8) d'endroits se trouvant à la périphérie de l'emplacement particulier.

## Patentansprüche

1. System zum Starten mindestens einer Drohne (1) ausgehend von einem Schutzraum, der dazu bestimmt ist, mindestens eine Drohne zu lagern, wobei das System eine Bodensteuerzentrale (40), eine Vielzahl von Drohnen, deren Bewegungen von der Zentrale gesteuert werden, und mindestens einen Detektor (41), der mit einem besonderen Platz des Bodens assoziiert ist, umfasst, wobei die Zentrale mindestens ein Kommunikationsmittel mit der mindestens einen Drohne umfasst, um ein Auslösesignal des Startens von dem Schutzraum zu übertragen, wobei der mindestens eine Detektor ein Übertragungsmittel zu der Steuerzentrale eines Erfassungssignals eines Ereignisses umfasst, das mit einem unvorhergesehenen Ereignis, das auf dem besonderen Platz abläuft, assoziiert ist, wobei der Empfang des Erfassungssignals eines Ereignisses durch die Steuerzentrale das Auslösesignal des Startens auslöst, um eine Trajektorie zu bewirken, die mindestens durch den besonderen Platz des Bodens durchgeht, wo sich das Ereignis ereignet hat,
**dadurch gekennzeichnet, dass** die Drohnen Signale senden, die für ihren aktuellen Betrieb repräsentativ sind, wie die Ladung der Batterie und ihre Positionen, wobei die Zentrale die zur Rückkehr zu dem Ort des Startens benötigte Zeit kalkuliert, und die Zeit für eine neue Drohne, um sich zu dem Ort des Ereignisses zu begeben, wobei die Zentrale (40) ein Startsignal zu einer zweiten Drohne sendet, die sich in dem Schutzraum befindet, wenn die Autonomie der Drohne, die auf dem besonderen Platz fliegt, es ihr erlaubt, nur im Laufe einer Dauer mindestens gleich der Summe der Hin- und Rückflugzeit zu bleiben, wobei die Zentrale ein Rückkehrsignal zu dem Schutzraum zu der Drohne sendet, die auf dem besonderen Platz fliegt, wenn die zweite Drohne auf dem besonderen Platz ankommt.

2. Startsystem nach Anspruch 1, **dadurch gekennzeichnet, dass** die mindestens eine Drohne (1) mit einer Kamera und einem Mittel zum Senden der von der Kamera aufgenommenen Bilder zu der Steuerzentrale (40) versehen ist.

3. Startsystem nach Anspruch 2, **dadurch gekennzeichnet, dass** die Steuerzentrale (40) die Bilder, die von einer Drohne empfangen werden, mit Bildern, die vorab im Speicher aufgezeichnet und bei einer normalen Situation aufgenommen wurden, vergleicht, die Unterscheidungselemente von einer normalen Situation bestimmt und diese Unterscheidungselemente auf einem Bildschirm anzeigt.

4. Startsystem nach Anspruch 3, **dadurch gekennzeichnet, dass** die Steuerzentrale (40) die Unterscheidungselemente mit vorab im Speicher aufgezeichneten visueller Elementen vergleicht, um die Art des erfassten Ereignisses zu bestimmen, die Zentrale ein Signal zu einem Eingriffsort sendet, wenn das Unterscheidungselement unter den vorab im Speicher aufgezeichneten visuellen Elementen erkannt wird, und der Code, der mit diesem Unterscheidungselement assoziiert ist, das Senden eines solchen Signals spezifiziert.

5. Startsystem nach Anspruch 1, **dadurch gekennzeichnet, dass** der mindestens eine Detektor (41) die Gegenwart von Rauch erfasst, und dass die mindestens eine Drohne (1) mit einem Wärmefühler und mit einem Mittel zum Senden der Daten, die von diesem Wärmefühler erzeugt werden, zu der Steuerzentrale (40) versehen ist, wobei ein Warnsignal, das einen Brand angibt, zu einem Eingriffsort gesendet wird, wenn die Steuerzentrale (40) bestimmt, dass die empfangenen Daten eine Steigerung der Temperatur an dem Ort des Ereignisses angeben.

6. Startsystem nach Anspruch 1, **dadurch gekennzeichnet, dass** der mindestens eine Detektor (41) die Radioaktivität eines bestimmten Orts erfasst, und dass die mindestens eine Drohne mit einem Geigerzähler und einem Mittel zum Senden der Daten, die von diesem Geigerzähler erzeugt werden, zu der Steuerzentrale (40) versehen ist, wobei ein Warnsignal angibt, dass ein Leck eines radioaktiven Teilchens zu einem Eingriffsort gesendet wird, wenn die Steuerzentrale (40) bestimmt, dass die empfangenen Daten höher sind als ein bestimmter Schwellenwert.

7. Startsystem nach einem der vorstehenden Ansprüche, **dadurch gekennzeichnet, dass** die mindestens eine Drohne über ein Mittel zum Senden von Signalen zu der Überwachungszentrale verfügt, die für ihren aktuellen Betrieb repräsentativ sind, wie die Ladung ihrer Batterie und ihre Position, bei der Ankunft auf dem besonderen Platz, wobei die mindestens eine Drohne zu der Überwachungszentrale ein Signal sendet, das es der Zentrale erlaubt, die Zeit zu berechnen, die für den Rückflug erforderlich ist, wobei die Zentrale, die mit Hilfe dieser Signale bestimmt, dass die Autonomie der Drohne für eine Rückkehr zu dem Ort des Startens gerade ausreicht, dann ein Rückkehrsignal der Drohne sendet.

8. Startsystem nach einem der vorstehenden Ansprüche, **dadurch gekennzeichnet, dass** die Steuerzentrale (40) einen Hinweg zu dem besonderen Platz bestimmt, der in jedem Punkt von dem Rückkehrweg zu dem Schutzraum um mindestens eine bestimmte Distanz abweicht.

9. Startsystem nach einem der vorstehenden Ansprüche unter der Abhängigkeit von Anspruch 2, **dadurch gekennzeichnet, dass** die Steuerzentrale (40) den Weg der mindestens einen Drohne beim Flug ändert, wenn der Detektor das Ereignis nicht mehr erkennt, wobei es der geänderte Weg erlaubt, Bilder mit Hilfe der Kamera (8) an Orten aufzunehmen, die sich am Umfang der besonderen Platzes befinden.

## Claims

1. System for take-off of at least one drone (1) from a shelter intended to store at least one drone, said system comprising a ground control station (40), a plurality of drones whose movements are controlled by said control station and, at least one detector (41) associated with a particular location on the ground, the station comprising at least one means for communicating with the at least one drone to transmit a signal for triggering take-off from the shelter, the at least one detector comprising a means for transmitting to the control station an event detection signal associated with an unforeseen event unfolding at the particular location, the reception by the control station of the event detection signal triggering the signal for triggering take-off to travel in a trajectory passing at least through the particular location on the ground where the event has taken place,
**characterised in that** the drones transmit signals representing their current operation, such as the battery charge and their positions, the station calculating the necessary inbound travel time to return to the take-off location and the outbound travel time for a new drone to reach the site of the event, the station (40) transmitting a take-off signal to a second drone located in the shelter when the battery charge of the drone flying over the particular location does not allow it to remain in flight for a period at least equal to the total accumulated outbound and inbound travel time, the station transmitting a return-to-the-shelter signal to the drone flying over the particular location when the second drone arrives at the particular location.

2. System for take-off according to Claim 1, **characterised in that** the at least one drone (1) is equipped with a camera and a means for transmitting images captured by the camera to the control station (40).

3. System for take-off according to Claim 2, **characterised in that** the control station (40) compares the images received from a drone with stored pre-recorded images taken during a normal situation, determines the differentiating elements of a normal situation and displays these differentiating elements on a screen.

4. System for take-off according to Claim 3, **characterised in that** the control station (40) compares the differentiating elements with stored pre-recorded visual elements in order to determine the nature of the detected event, the station transmits a signal to an action site when the differentiating element is recognised from among the stored pre-recorded visual elements, and that the code associated with this differentiating element specifies the transmission of such a signal.

5. System for take-off according to Claim 1, **characterised in that** the at least one detector (41) detects the presence of smoke, and **in that** the at least one drone (1) is equipped with a heat sensor and a means for transmitting data produced by this heat sensor to the control station (40), an alert signal indicating a fire is transmitted to an action site when the control station (40) determines that the received data indicate a rise in temperature at the location of the event.

6. System for take-off according to Claim 1, **characterised in that** the at least one detector (41) detects the radioactivity of a predetermined place, and **in that** the at least one drone is equipped with a Geiger counter and a means for transmitting data produced by this Geiger counter to the control station (40), an alert signal indicating a radioactive particle leak is transmitted to an action site when the control station (40) determines that the received data exceed a predetermined threshold.

7. System for take-off according to any one of the preceding claims, **characterised in that** the at least one drone has a means for transmitting to the monitoring station signals representing its current operation, such as its battery charge and its position, upon arrival at the particular location, the at least one drone transmits to the monitoring station a signal allowing the said station to calculate the time needed for the return trip, the station determining on the basis of these signals that the battery charge of the drone is just enough for it to return to the take-off location then transmits a signal for the drone's return.

8. System for take-off according to any one of the preceding claims, **characterised in that** the control station (40) determines an outward path to this particular location which diverges at every point from the return path to the shelter by at least a predetermined distance.

9. System for take-off according to any one of the preceding claims dependent on Claim 2, **characterised in that** the control station (40) modifies the path of the at least one drone in flight when the detector no longer detects the event, the modified path making it possible to capture images using the camera (8) of sites on the periphery of the particular location.
